# EUROPEAN PATENT APPLICATION

(11) **EP 1 318 460 A2**
(43) Date of publication of application: **11.06.2003**
(21) Application number: 02027323.1
(22) Date of filing: 06.12.2002
(51) Int. Cl.: G06F 15/173

(54) **Node-to-node data transfer method and apparatus**

(30) Priority: 10.12.2001 JP 2001375385
(71) Applicant: NEC CORPORATION, Tokyo (JP)
(72) Inventor: Inaba, Masanobu, Kofu-shi, Yamanashi (JP)
(74) Representative: Betten & Resch

(57) **Abstract**

A plurality of CPUs and a plurality of RCUs are provided in a node. When issuing a node-to-node data transfer instruction, each CPU determines the destination of the node-to-node data transfer instruction based on the number of unprocessed instructions in each of the RCUs in the node in which the CPU is included so that the load is distributed evenly among the RCUs.

## Description

### BACKGROUND OF THE INVENTION

### Field of the Invention

The present invention relates to a multi-node computer system in which a plurality of nodes are connected via a node-to-node crossbar switch, and more particularly to a node-to-node data transfer technology that increases a node-to-node data transfer speed.

### Description of the Related Art

In a multi-node computer system in which a plurality of nodes are connected via a node-to-node crossbar switch, each node usually has a plurality of processors (CPUs) to allow them to execute instructions in parallel to increase the instruction processing speed within the node. However, if only instruction processing performance in a node is increased but if node-to-node data transfer performance remains low, the performance of the multi-node computer system cannot be improved. This means that node-to-node data transfer performance must be high enough to be compatible with instruction processing performance within the node.

To solve this problem, many technologies have been conventionally proposed to increase node-to-node data transfer performance. For example, according to the technology disclosed in Japanese Patent Application No. 2001-231003, a plurality of node-to-node connection controllers (RCU) that control node-to-node data transfer are provided in each node. Node-to-node data transfer instructions output from a plurality of processors are distributed for processing among the node-to-node connection controllers to increase node-to-node data transfer performance.

According to the technology disclosed in Japanese Patent Application No. 2001-231003 described above, each node has one queue for the plurality of node-to-node connection controllers in the node, and the node-to-node transfer instructions issued from the processors in the node are stored in this queue in order of issuance. Then, a node-to-node data transfer instruction stored in the queue is allocated to a node-to-node connection controller determined by the order in which the instruction is stored. For example, if a node includes two node-to-node connection controllers RCU0 and RCU1, the node-to-node data transfer instructions (first, second, third, fourth, and so on) stored into the queue are allocated to node-to-node connection controllers in order of RCU0, RCU1, RCU0, RCU1, and so on. Therefore, if the node-to-node data transfer instructions each transfer the same amount of data, this method makes the load even among the node-to-node connection controllers and increases the node-to-node data transfer performance.

However, if the amount of data transferred by node-to-node data transfer instructions differs from instruction to instruction, a problem might develop that a particular node-to-node connection controller, if loaded heavily, would decrease the node-to-node data transfer performance. For example, assume that the amount of data transferred by the node-to-node data transfer instruction, which is the first entry in the queue, is large. In this case, node-to-node connection controller RCU0 is still performing processing for the node-to-node data transfer instruction which is the first entry in the queue even after node-to-node connection controller RCU1 has completed processing for the node-to-node data transfer instruction which is the second entry in the queue. Thus, even if node-to-node connection controller RCU1 is able to process a node-to-node data transfer instruction, the third and the following node-to-node data transfer instructions cannot be allocated to node-to-node connection controllers with the result that the node-to-node data transfer performance is decreased.

### SUMMARY OF THE INVENTION

In view of the foregoing, it is an object of the present invention to provide a node-to-node data transfer method and a node-to-node data transfer apparatus that give high node-to-node data transfer performance even if the amount of data transferred by node-to-node data transfer instructions differs from instruction to instruction.

To achieve the above object, a node-to-node data transfer method according to the present invention is for use in a multi-node computer system in which a plurality of nodes, each comprising a plurality of processors and a plurality of node-to-node connection controllers, are connected via a node-to-node crossbar switch for a node-to-node data transfer via the crossbar switch. The method comprises the step of issuing, by each of the processors, node-to-node data transfer instructions to the node-to-node connection controllers in such away that loads of the node-to-node connection controllers in a node in which the processor is included are evenly distributed.

This configuration evenly distributes the load among the node-to-node connection controllers to increase node-to-node data transfer performance.

More specifically, the node-to-node data transfer method according to the present invention is a method wherein each of the processors changes a ratio of node-to-node data transfer instructions to be issued to each of the node-to-node connection controllers according to a number of unprocessed node-to-node data transfer instructions in each of the node-to-node connection controllers in the node, in which the processor is included, to distribute the load evenly among the node-to-node connection controllers.

In addition, as a preferred apparatus for implementing the node-to-node data transfer method described above, a node-to-node data transfer apparatus according to the present invention is an apparatus wherein each of the node-to-node connection controllers comprises an instruction reception counter that counts the number of node-to-node data transfer instructions issued to the controller and an instruction processing counter that count that counts the number of node-to-node data transfer instructions processed by the controller and wherein each of the processors comprises a processing RCU determination circuit that obtains counts in the instruction reception counter and the instruction processing counter from each of the node-to-node connection controllers in the node in which the processor is included, calculates the number of unprocessed node-to-node data transfer instructions in each of the node-to-node connection controllers based on the obtained counts, and changes the ratio of node-to-node data transfer instructions to be issued to each of the node-to-node connection controllers according to the number of unprocessed node-to-node data transfer instructions in each the node-to-node connection controllers.

### BRIEF DESCRIPTION OF THE DRAWINGS

FIG. 1 is a block diagram showing an embodiment according to the present invention;
FIG. 2 is a block diagram showing an example of the configuration of a processor (CPU) 10-0;
FIG. 3 is a diagram showing an example of a node-to-node data transfer instruction that has been converted to a memory access format;
FIG. 4 is a diagram showing an example of the configuration of a node-to-node connection controller (RCU) 20-0;
FIG. 5 is a diagram illustrating a node-to-node crossbar switch 2;
FIG. 6 is a flowchart showing the operation of a write transfer instruction;
FIG. 7 is a flowchart showing the operation of a processing RCU determination circuit 131;
FIG. 8 is a diagram showing an example of transfer parameters;
FIG. 9 is a diagram showing the operation of a port number generation circuit 221;
FIG. 10 is a diagram showing another embodiment of the present invention; and
FIG. 11 is a diagram showing another embodiment of the present invention.

### DETAILED DESCRIPTION OF THE PREFERRED EMBODIMENTS

Some embodiments of the present invention will be described below in detail with reference to the drawings.

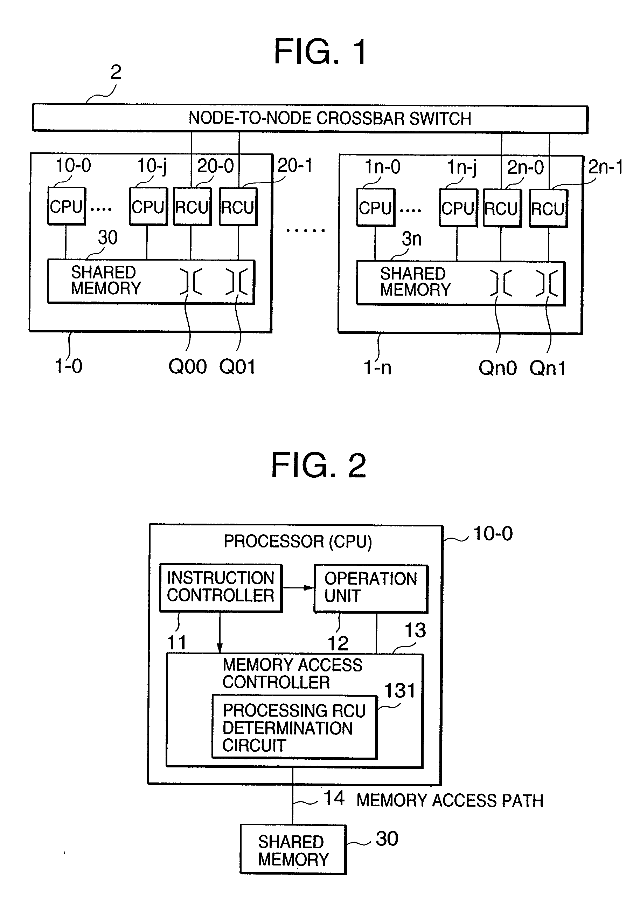

Referring to FIG. 1, a multi-node computer system is shown as an embodiment of the present invention in which a plurality of nodes 1-0 to 1-n are connected via a node-to-node crossbar switch 2.

The node 1-0 comprises a plurality of processors (CPU) 10-0 to 10-j, two node-to-node connection controllers (RCU) 20-0 and 20-1, and a shared memory 30 shared by all CPUs and RCUs. Other nodes have the same configuration as that of node 1-0.

The shared memory 30 in the node 1-0 includes two queues Q00 and Q01, provided respectively for RCUs 20-0 and 20-1, and a parameter storage area (not shown) in which transfer parameters are written by a user program running on the CPUs 10-0 to 10-j.

Each of the CPUs 10-0 to 10-j in the node 1-0 has two functions: the first function is a general function allows the CPU to read an instruction it is going to process from the shared memory 30 and to perform processing according to the instruction, and the second function changes the ratio of node-to-node data transfer instructions issued to the RCU 20-0 to those issued to 20-1 according to the load of the RCUs 20-0 and 20-1 in the node 1-0.

FIG. 2 is a block diagram showing an example of the configuration of the CPU 10-0 that has the functions described above.

As shown in the figure, the CPU 10-0 comprises an instruction controller 11, an operation unit 12, and a memory access controller 13 that includes a processing RCU determination circuit 131. The memory access controller 13 and the shared memory 30 are connected via a memory access path 14. Other CPUs have the same configuration as that of the CPU 10-0.

The instruction controller 11 reads an instruction to be processed by the CPU 10-0 from the shared memory 30 via the memory access controller 13 and outputs an operation instruction to the operation unit 12 or the memory access controller 13 according to the contents of the instruction. In addition, upon detecting a node-to-node data transfer instruction (including an instruction code, auxiliary information, and address at which transfer parameters which will be described later are stored) issued from a user program running on the CPU 10-0, the instruction controller 11 passes the instruction to the memory access controller 13.

The operation unit 12 reads the contents of the internal registers (not shown), or writes the operation result into the internal registers, according to the contents of the operation instruction received from the instruction controller 11.

The memory access controller 13 writes operation results into the shared memory 30, or reads operation data from the shared memory 30, according to the contents of the operation instruction received from the instruction controller 11.

The processing RCU determination circuit 131 included in the memory access controller 13 regularly determines the ratio of RCU requests to be issued to the RCU 20-0 to those to be issued to RCU 20-1, based on the load of the RCUs 20-0 and 20-1 in the node 1-0 in which the CPU 10-0 is included.

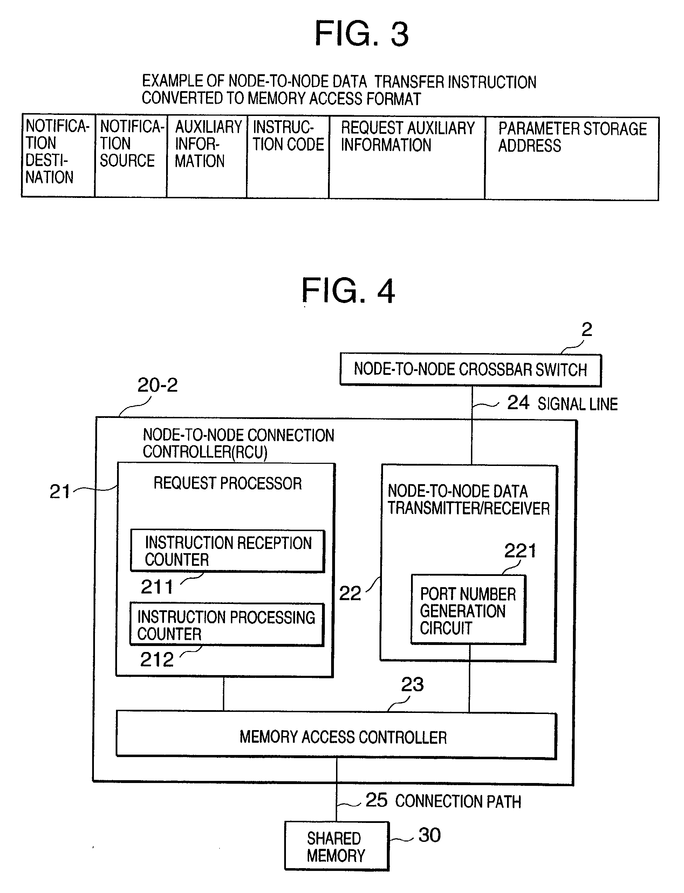

In addition, the memory access controller 13 converts the format of a node-to-node data transfer instruction passed from the instruction controller 11 to the memory access format shown in FIG. 3. As shown in the figure, the node-to-node data transfer instruction (RCU request) that has been converted has three additional fields, that is, notification destination field, notification source field, and request auxiliary information field. The notification destination field contains the RCU number of one of two RCUs, 20-0 and 20-1, included in the node 1-0 to which the RCU request is to be sent, and the destination source field contains the CPU number of the CPU that has issued the node-to-node data transfer instruction. Note that, in the notification destination field, the RCU number of the RCU 20-0 or the RCU 20-1 is set according to the ratio determined by the processing RCU determination circuit 131.

The RCU request created as described above is sent from the memory access controller 13 to the shared memory 30 via the memory access path 14. The shared memory 30 notifies the RCU, specified by the RCU number in the notification destination field of the RCU request, of the RCU request.

The RCU 20-0 transfers data to or from other nodes according to the RCU requests sent from the CPUs 10-1 to 10-j included in the node 1-0. The other RCUs have the same configuration and the function as those of the RCU 20-0.

Referring to FIG. 4, the RCU 20-0 comprises a request processor 21, which includes an instruction reception counter 211 and an instruction processing counter 212, a node-to-node data transmitter/receiver 22, which includes a port number generation circuit 221, and a memory access controller 23.

In response to an RCU request from the CPUs 10-0 to 10-j of the node 1-0 via the shared memory 30, a connection path 25, and the memory access controller 23, the request processor 21 increments (adds 1 in this embodiment) the count value (initial value of 0) of the instruction reception counter 211 and, at the same time, stores the received RCU request into the queue Q00 that is provided in the shared memory 30 and that corresponds to the RCU 20-0. In addition, the request processor 21 outputs an operation instruction to the node-to-node data transmitter/receiver 22 or the memory access controller 23 according to the contents of the RCU request at the top of the queue Q00 and, at the same time, increments (adds 1 in this embodiment) the count value of the instruction processing counter 212. The count values of the instruction reception counter 211 and the instruction processing counter 212 may be referenced from the CPUs in the same node.

The node-to-node data transmitter/receiver 22, connected to the node-to-node crossbar switch 2 via a signal line 24, transfers data or control signals to or from other nodes. The port number generation circuit 221 generates a port number, which will be used as routing information in the node-to-node crossbar switch 2, based on the transfer destination node number and the RCU number.

The memory access controller 23, connected to the shared memory 30 via the connection path 25, is a circuit that transfers data or control information to or from the shared memory 30 according to an instruction from the request processor 21.

In addition, based on the node-to-node control information sent from other nodes, the RCU 20-0 reads data from the shared memory 30 in the node 1-0 and transfers the data, which has been read, to a requesting node, or writes data, which has been received from a requesting node, into the shared memory 30. When node-to-node data transfer takes place, data transfer control information is sent to the node-to-node data transmitter/receiver 22 via the signal line 24 before data is transferred. The received control information is sent to the request processor 21. The request processor 21 issues an instruction to the memory access controller 23 and node-to-node data transmitter/receiver 22 according to the control information. The memory access controller 23 transfers data to or from the shared memory 30 according to the instruction from the request processor 21. The node-to-node data transmitter/receiver 22 also transfers control signals or data to or from other nodes according to the instruction from the request processor 21. When transferring control signals or data to or from other nodes, the port number generation circuit 221 generates a transfer destination port number which is the routing information used in the node-to-node crossbar switch 2.

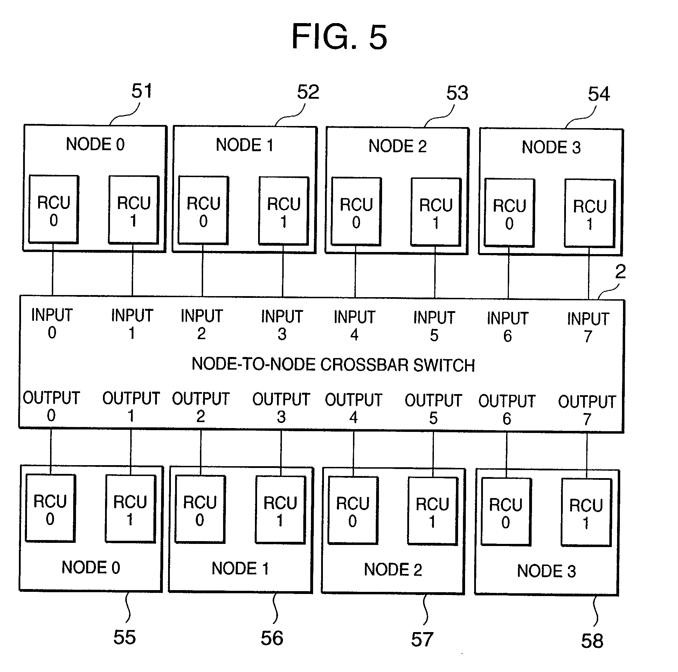

FIG. 5 shows an example of the node-to-node crossbar switch 2. The node-to-node crossbar switch 2 includes an 8x8 crossbar composed of eight input ports and eight output ports. For convenience of illustration, the nodes are divided into two in FIG. 5: data transmission nodes 51-54 and data reception nodes 55-58. In this example, each node has two RCUs, that is, RCU0 and RCU1. The node-to-node crossbar switch 2 can transfer data from eight input ports to eight output ports. This data transfer is executed according to a transfer destination port number sent from the RCU connected to an input port. For example, if the transfer destination port number is 0, data is transferred to output port 0, that is, to RCU0 in node 0. If the transfer destination port number is 3, data is transferred to output port 3, that is, to RCU1 in node 1. The value of the transfer destination port number indicates the output port, and data is transferred to the RCU connected to the port. In this way, the node-to-node crossbar switch 2 is configured so that control information and data from any input port may be sent to any output port according to the specified transfer destination port number.

Next, the operation of the embodiment will be described.

There are two types of node-to-node data transfer instruction: read transfer instruction and write transfer instruction. The read transfer instruction reads data from the shared memory of a remote node, transfers the data, which has been read, from the remote node to the local node, and writes the data into the shared memory of the local node. The write transfer instruction reads data from the shared memory of the local node, transfers the data, which has been read, from the local node to a remote node, and writes the data into the shared memory of the remote node. In this embodiment, the write transfer operation will be described in detail.

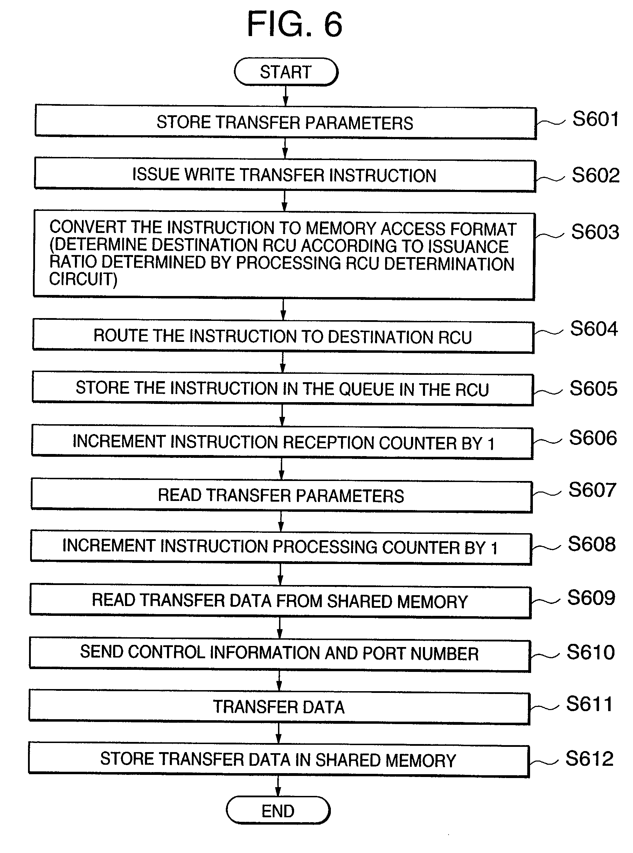

Before issuing the write transfer instruction, a user program running on the CPU 10-0 stores the transfer parameters into a free area in the parameter storage area provided in the shared memory 30 in the node 1-0 and then issues the write transfer instruction with the transfer parameter storage location (parameter storage address) specified in the operand (S601 and S602 in FIG. 6).

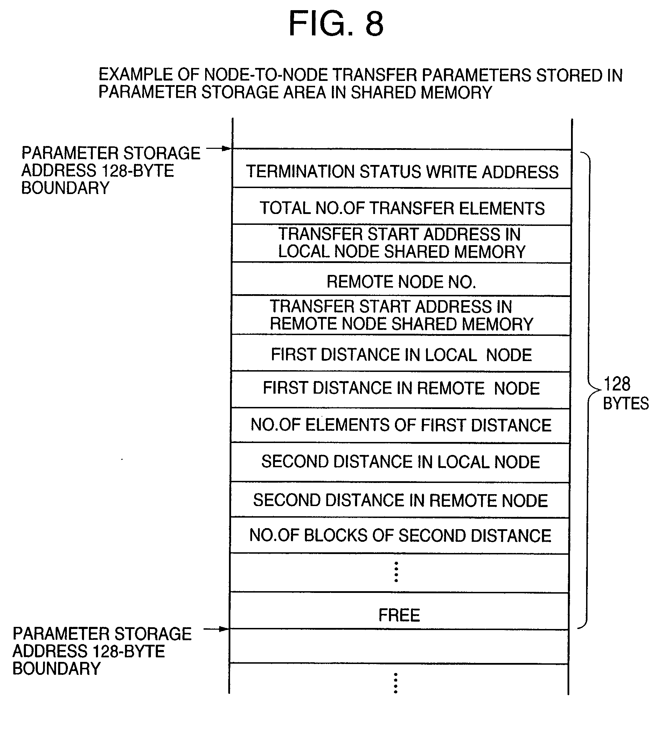

FIG. 8 shows an example of the transfer parameters stored in the parameter storage area. This example shows the transfer parameters used for 2-distance transfer in which a part (sub-array) of multi-dimensional array data is transferred efficiently at a time. As shown in the figure, one section of the parameter storage area, 128 bytes in size, includes the termination status write address at which the status is written in a memory indicating, for example, whether the transfer has been terminated normally or an exception has occurred, the total number of transfer elements indicating the total transfer amount represented by the number of elements where eight-byte data is one element, the transfer start address in the node (local node) in which the processor from which the instruction is issued is included, the node number of the node (remote node) to which data is transferred during node-to-node transfer, the RCU number of the RCU to which data is transferred during node-to-node transfer, the transfer start address in the shared memory in the remote node, the first and second element distances in the local node and remote node, and the number of transfer elements in the first and second distances.

Upon detecting a write transfer instruction issued from a user program running on the CPU 10-0, the instruction controller 11 converts the write transfer instruction to the memory access format, shown in FIG. 3, via memory access controller 13 (S603). At this time, the RCU number of the RCU 20-0 or the RCU 20-1 is set in the notification destination field according to the ratio (ratio of the number of RCU requests issued to RCU 20-0 to the number of RCU requests issued to RCU 20-1) determined at that moment by the processing RCU determination circuit 131. For example, if RCU 20-0:RCU 20-1 = 1:1, then the RCU number of the RCU 20-0 is set in the notification destination field in a RCU request, and the RCU number of the RCU 20-1 is set in the notification destination field in the next RCU request. In this way, the RCU number of the RCU 20-0 and that of the RCU 20-1 are set alternately in the notification destination field. If RCU 20-0:RCU 20-1 = 1:0, the RCU number of the RCU 20-0 is set in the notification destination field of all RCU requests.

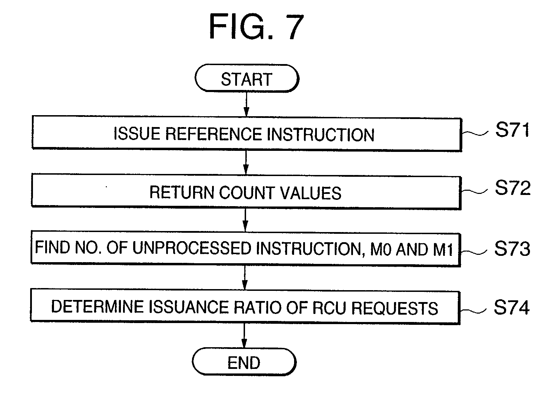

The operation of the processing RCU determination circuit 131 in the CPU 10-0 will be described. The processing RCU determination circuit 131 issues a count value reference instruction to the RCUs 20-0 and 20-1 at a predetermined interval (S71 in FIG. 7). In response to this instruction, the request processor 21 in the RCUs 20-0 and 20-1 each returns the count values in the instruction reception counter 211 and the instruction processing counter 212 in the request processor to the processing RCU determination circuit 131, from which the reference request was issued, via the shared memory 30 (S72).

Using the returned values, the processing RCU determination circuit 131 executes the operation indicated by expressions (1) and (2) shown below to find the number of unprocessed node-to-node data transfer instructions (M0 and M1) in the RCUs 20-0 and 20-1 (S73).

M0 = (Count value of instruction reception counter 211 in RCU 20-0) - (Count value of instruction processing counter 212 in RCU 20-0) ... (1)

M1 = (Count value of instruction reception counter 211 in RCU 20-1) - (Count value of instruction processing counter 212 in RCU 20-1) ... (2)

After that, based on the number of unprocessed instructions M0 and M1 in the RCUs 20-0 and 20-1, the processing RCU determination circuit 131 determines the issuance ratio of RCU requests issued to RCUs 20-0 and 20-1 that evenly distributes the load between the RCUs 20-0 and 20-1 (S74).

There are many methods for determining this ratio. For example, one method that may be used is that RCU 20-0:RCU 20-1 =0:1 if M0>M1, RCU 20-0:RCU 20-1 = 1:1 if M0=M1, and RCU 20-0 : RCU 20-1 = 1:0 if MO<M1. Another method that may be used is that RCU 20-0:RCU 20-1 = 1:K(M0-M1) if M0>M1, RCU 20-0:RCU 20-1 = 1:1 if M0=M1, and RCU 20-0:RCU 20-1 = K(M1-M0) : 1 if M0<M1, where K is a constant equal to or larger than 1.

If three or more RCUs are included in a node, an example of method that may be used is as follows. That is, RCU requests are issued only to the RCU having the smallest number of unprocessed instructions with no RCU request to other RCUs. If there are two or more RCUs having the smallest number of unprocessed instructions, RCU requests are issued evenly to the two or more RCUs having the smallest number of unprocessed instructions with no RCU request to other RCUs.

By issuing RCU requests to the RCUs 20-0 and 20-1 according to the issuance ratio determined as described above, the load may be distributed evenly between the RCUs 20-0 and 20-1. That is, an RCU having a smaller number of unprocessed node-to-node data transfer instructions has a lighter load. The processing RCU determination circuit 131 determines the RCU request issuance ratio between the RCUs 20-0 and 20-1 such that more RCU instructions are issued to an RCU having a smaller number of unprocessed instructions. This will well balance the load between the RCUs 20-0 and 20-1.

For example, if the memory access controller 13 determines that the destination of the a write transfer instruction, which is issued by a user program running on the CPU 10-0, to the RCU 20-0 based on the issuance ratio between the RCUs 20-0 and 20-1 determined by the processing RCU determination circuit 131, then the memory access controller 13 converts the write transfer instruction to the memory access format such as the one shown in FIG. 3. In this case, the RCU number of the RCU 20-0 is set in the notification destination field. After that, the memory access controller 13 sends the RCU request, which has been converted to the memory access format, to the shared memory 30 via the memory access path 14.

The shared memory 30 routes the RCU request to the RCU 20-0 based on the contents of the notification destination field in the RCU request (S604 in FIG. 6).

In response to the RCU request, the memory access controller 23 in the RCU 20-0 passes the received RCU request to the request processor 21.

Then, the request processor 21 checks the contents of the instruction code field of the RCU request to identify that the instruction is a write transfer instruction. The request processor 21 stores the RCU request in the queue Q00 provided for the RCU 20-0 and, at the same time, increments the count value in the instruction reception counter 211 by one (S605 and S606). When all preceding RCU requests in the queue Q00 have been processed and the RCU request described above is going to be processed, the request processor 21 passes the parameter storage address, which is set in the parameter storage address field of the RCU request, to the memory access controller 23, requests it to read the transfer parameters and, at the same time, increments the instruction processing counter 212 by one (S607 and S608).

The memory access controller 23 reads 128 bytes of transfer parameters (see FIG. 8) from the shared memory 30 according to the parameter storage address received from the request processor 21 and sends them to the request processor 21.

The request processor 21 checks the contents of the received parameters to find the transfer start address in the shared memory of the local node (node 1-0), total number of transfer elements, first and second distances of the local node, and number of elements of the first and second distance elements and, based on the received parameters, instructs the memory access controller 23 to read data, which will be transferred for writing from the local node to the remote node, from the shared memory 30 (S609).

In response to this instruction, the memory access controller 23 reads transfer data, which is to be transferred between nodes, from the shared memory 30 and sends it to the node-to-node data transmitter/receiver 22.

The node-to-node data transmitter/receiver 22 temporarily stores the transfer data, received from the memory access controller 23, in the buffer (not shown) and, when a predetermined amount of transfer data is accumulated in the buffer, notifies the request processor 21 that the transfer data has been accumulated.

Then, the request processor 21 sends the remote node number (node number of node 1-n), RCU number in the remote node, transfer start address in the shared memory in the remote node, and first and second distances in the remote node, which are specified as the transfer parameters, to the node-to-node data transmitter/receiver 22 and instructs it to start data transfer.

In response to this instruction, the node-to-node data transmitter/receiver 22 transfers control information, which includes the remote node number, transfer start address in the shared memory in the remote node, and first and second distances in the remote node, to the remote node (node 1-n) via the node-to-node crossbar switch 2 before sending data. At this time, the node-to-node data transmitter/receiver 22 uses the port number generation circuit 221 to generate routing information (port number) on the node-to-node crossbar switch 2, which will be required to transfer control information or transfer data to the node 1-n, and outputs the generated information to the node-to-node crossbar switch 2 (S610).

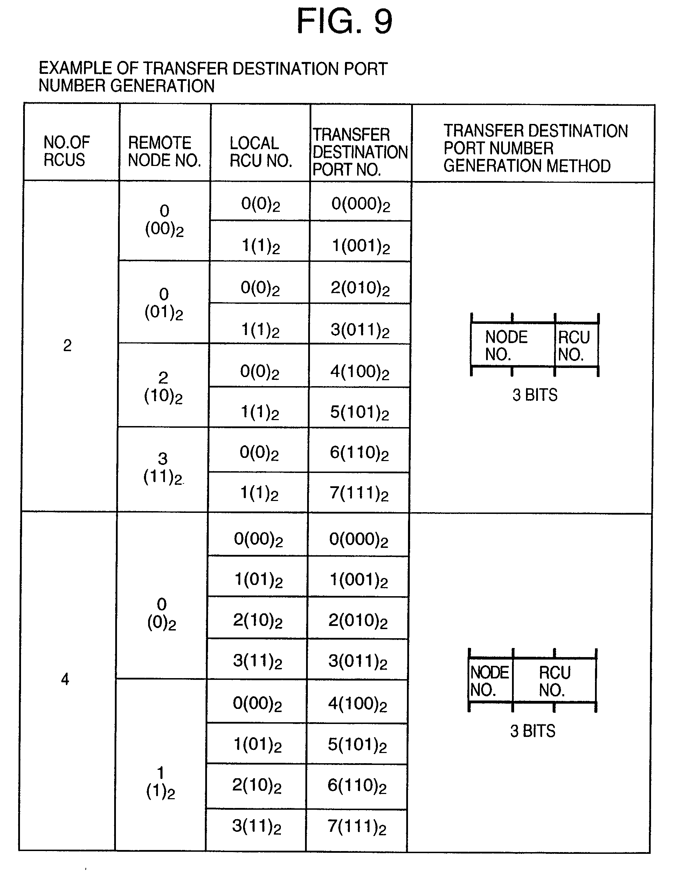

FIG. 9 shows how the port number generation circuit 221 generates port numbers. Referring also to FIG. 5, there is a correspondence between port numbers and node numbers when a node includes one RCU; that is, nodes 0, 1, 2, and so on correspond to ports 0, 1, 2, and so on. However, when one node includes two ports as in this embodiment, a port number cannot be specified by a node number because one node uses two ports. Therefore, in this embodiment, the port number generation circuit 221 combines a binary node number and a binary RCU number (node number immediately followed by RCU number) to generate the port number of a transfer destination, as shown in FIG. 9. For example, in a system where there are four nodes each including two RCUs, a two-digit binary number is used to represent a node number and a one-digit binary number is used to represent an RCU number, respectively. By combining those numbers, port number 0, that is, (000)₂, to port number 7, that is, (111)₂ may be allocated to the RCUs as shown in FIG. 9. Also, in a system where there are two nodes each including four RCUs, a one-digit binary number is used to represent a node number and a two-digit binary number is used to represent an RCU number, respectively. By combining those numbers, port number 0, that is, (000)₂, to port number 7, that is, (111)₂ may be allocated to the RCUs as shown in FIG. 9.

After outputting the control information and the port number to the node-to-node crossbar switch 2, the node-to-node data transmitter/receiver 22 sequentially outputs data accumulated in the buffer to the node-to-node crossbar switch 2, a specified amount of data at a time. The node-to-node crossbar switch 2 switches the switches of the crossbar according to the port number and transfers the control information and data to a desired port (S611).

In the remote node 1-n, the node-to-node data transmitter/receiver 22 in the RCU (RCU 2n-0 in this example) corresponding to the node number receives the control information and transfer data that have been sent. The control information is sent to the request processor 21, and the transfer data is stored temporarily in the buffer in the node-to-node data transmitter/receiver 22.

In response to the control information, the request processor 21 generates a shared memory address, which indicates the location in the shared memory 30 where the transfer data is to be written, based on the contents of the control information. In addition, the request processor 21 outputs a read instruction, which reads transfer data from the buffer and which includes the shared memory address, to the memory access controller 23. In response to this instruction, the memory access controller 23 reads the transfer data from the buffer in the node-to-node data transmitter/receiver 22 and writes it at the shared memory address in the shared memory 30 specified by the read instruction (S612).

A node-to-node write transfer is executed as described above. On the other hand, a node-to-node read transfer is executed as follows. First, a data read instruction is sent from a local node to a remote node. The remote node reads data from the shared memory and sends the data, which has been read, to the local node via the node-to-node crossbar switch. Then, the local node writes the data, which has been received, in the shared memory in the local node.

As described above, the apparatus in this embodiment provides queues, one for each RCU, to allow the RCUs to process node-to-node data transfer instructions concurrently, giving transfer performance represented by (transfer performance of one RCU) x (No. of RCUs). The node-to-node data transfer instructions (RCU requests), which are output from the CPUs and whose format has been converted, are stored in one of the queues provided for the RCUs and are processed, one at a time, in order of accumulation. This configuration allows the CPUs to issue the next node-to-node data transfer instruction without having to wait for the termination of the preceding node-to-node data transfer, ensuring continued node-to-node data transfer. The ability to determine the destination of a node-to-node data transfer instruction by referencing the load status of the RCUs evenly distributes the load.

Although, the processing RCU determination circuit 131 determines the ratio of RCU requests issued to the RCUs in a node at a predetermined interval in the embodiment described above, the issuance ratio may be determined each time a node-to-node data transfer instruction is issued.

Next, another embodiment of the present invention will be described. Because this embodiment is similar to the embodiment described above except steps S601 and S603 in the flowchart in FIG. 6, the following describes in detail the processing executed instead of steps S601 and S603.

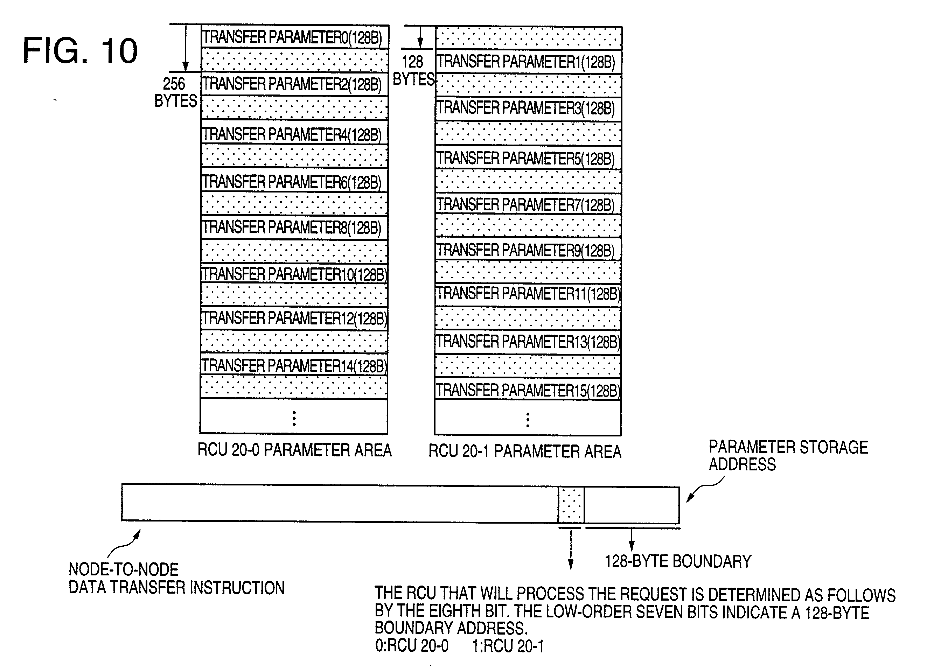

In this embodiment, the following processing is executed instead of step S601. When issuing the write transfer instruction, a user program running on the CPU 10-0 asks the memory access controller 13 about the destination RCU of the write transfer instruction (RCU request). Based on the instruction issuance ratio between RCU 20-0 and RCU 20-1 determined at that moment by the processing RCU determination circuit 131, the memory access controller 13 determines to which RCU, 20-0 or 20-1, the RCU request will be issued and returns the RCU number to the user program. Upon receiving the returned RCU number, the user program stores the transfer parameters in the parameter storage area based on the returned RCU number. In this embodiment, the parameter storage area is divided into two as shown in FIG. 10: RCU 20-0 parameter area and RCU 20-1 parameter area. The RCU 20-0 parameter area is composed of 128-byte areas, each beginning at byte 0, byte 256, byte 512, and so on, while the RCU 20-1 parameter area is composed of 128-byte areas, each beginning at byte 128, byte 384, byte 640, and so on. When the returned RCU number indicates the RCU 20-0, the user program stores the transfer parameters in the 128-byte area in the RCU 20-0 parameter area that follows the 128-byte area in the RCU 20-0 parameter area in which the transfer parameters were stored immediately before. When the returned RCU number indicates an RCU 20-1, the user program stores the transfer parameters in the 128-byte area in the RCU 20-1 parameter area that follows the 128-byte area in the RCU 20-1 parameter area in which the transfer parameters were stored immediately before. This processing is executed instead of step S601.

After that, the same operation as that in step S602 described above is executed and the user program issues a write transfer instruction that includes the transfer parameter storage location (parameter storage address).

Then, the processing described below is executed instead of step S603. Upon detecting a write transfer instruction issued from a user program running on the CPU 10-0, the instruction controller 11 converts the write transfer instruction to the memory access format (RCU request), shown in FIG. 3, via memory access controller 13. At this time, the destination RCU of the RCU request is determined based on the parameter storage address included in the write transfer instruction (The destination is RCU 20-0 if the eighth lowest-order bit is "0" of the parameter storage address, and the destination is RCU 20-1 if the eighth lowest-order bit is "1"), and the RCU number of the destination RCU is set in the notification destination field of the RCU request. After that, the RCU request is issued to the shared memory 30. The processing executed instead of step 603 is as described above.

After that, the same processing as that in steps S604 to S612 is executed.

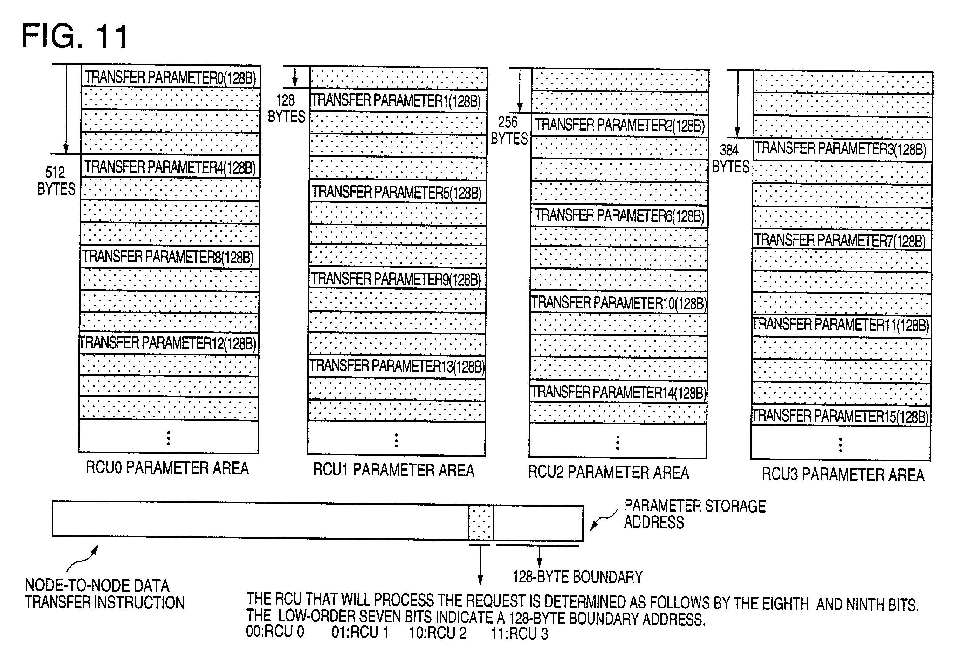

In the above embodiment, a node includes two RCUs. When a node includes four RCUs (RCU0 - RCU3), the parameter storage area is divided into four areas, that is, RCU0 parameter area to RCU3 parameter area, as shown in FIG. 11 and the destination RCU is determined by the eighth and ninth lowest-order bits. More specifically, when the eighth and ninth lowest-order bits are "00", "01, "10", and "11", the declination is RCU0, RCU1, RCU2, and RCU3, respectively.

According to the present invention, a plurality of node-to-node connection controllers are provided in each node and node-to-node data transfer instructions are issued to the node-to-node connection controllers so that the load is distributed evenly among the node-to-node connection controllers, as described above. This configuration allows the node-to-node connection controllers to have an equal load and, as a result, increases node-to-node data transfer performance even if the node-to-node data transfer instructions differ in the data transfer amount.

## Claims

1. A node-to-node data transfer method for use in a multi-node computer system in which a plurality of nodes, each comprising a plurality of processors and a plurality of node-to-node connection controllers, are connected via a node-to-node crossbar switch for a node-to-node data transfer via said crossbar switch, said method comprising the step of:
issuing, by each of said processors, node-to-node data transfer instructions to said node-to-node connection controllers in such a way that loads of said node-to-node connection controllers in a node in which said processor is included are evenly distributed.

2. The node-to-node data transfer method according to claim 1, wherein each of said processors changes a ratio of node-to-node data transfer instructions to be issued to each of said node-to-node connection controllers according to a number of unprocessed node-to-node data transfer instructions in each of the node-to-node connection controllers in the node in which said processor is included.

3. The node-to-node data transfer method according to claim 2,
wherein each of said node-to-node connection controllers counts a number of node-to-node data transfer instructions issued to said controller and a number of node-to-node data transfer instructions processed by said controller and
wherein each of said processors calculates the number of unprocessed node-to-node data transfer instructions in each of said node-to-node connection controllers based on the numbers counted by each of the node-to-node connection controllers in the node in which said processor is included and changes the ratio of node-to-node data transfer instructions to be issued to each of the node-to-node connection controllers according to the calculated number of unprocessed node-to-node data transfer instructions in each of the node-to-node connection controllers.

4. The node-to-node data transfer method according to one of claims 1 to 3,
wherein each of said node-to-node connection controllers transfers data to or from node-to-node connection controllers in other nodes according to a node-to-node data transfer instruction issued to said node-to-node connection controller.

5. A node-to-node data transfer apparatus for use in a multi-node computer system in which a plurality of nodes, each comprising a plurality of processors and a plurality of node-to-node connection controllers, are connected via a node-to-node crossbar switch for a node-to-node data transfer via said crossbar switch,
wherein each of said processors issues node-to-node data transfer instructions to said node-to-node connection controllers in such a way that loads of said node-to-node connection controllers in a node in which said processor is included are evenly distributed.

6. The node-to-node data transfer apparatus according to claim 5, wherein each of said processors changes a ratio of node-to-node data transfer instructions to be issued to each of said node-to-node connection controllers according to a number of unprocessed node-to-node data transfer instructions in each of the node-to-node connection controllers in the node in which said processor is included.

7. The node-to-node data transfer apparatus according to claim 6,
wherein each of said node-to-node connection controllers counts a number of node-to-node data transfer instructions issued to said controller and a number of node-to-node data transfer instructions processed by said controller and
wherein each of said processors calculates the number of unprocessed node-to-node data transfer instructions in each of said node-to-node connection controllers based on the numbers counted by each of the node-to-node connection controllers in the node in which said processor is included and changes the ratio of node-to-node data transfer instructions to be issued to each of the node-to-node connection controllers according to the calculated number of unprocessed node-to-node data transfer instructions in each of the node-to-node connection controllers.

8. The node-to-node data transfer apparatus according to claim 7,
wherein each of said node-to-node connection controllers comprises an instruction reception counter that counts the number of node-to-node data transfer instructions issued to said controller and an instruction processing counter that count that counts the number of node-to-node data transfer instructions processed by said controller and
wherein each of said processors comprises a processing RCU determination circuit that obtains counts in the instruction reception counter and the instruction processing counter from each of the node-to-node connection controllers in the node in which said processor is included, calculates the number of unprocessed node-to-node data transfer instructions in each of the node-to-node connection controllers based on the obtained counts, and changes the ratio of node-to-node data transfer instructions to be issued to each of the node-to-node connection controllers according to the number of unprocessed node-to-node data transfer instructions in each the node-to-node,connection controllers.

9. The node-to-node data transfer apparatus according to one of claims 5 to 8,
wherein each of said node-to-node connection controllers transfers data to or from node-to-node connection controllers in other nodes according to a node-to-node data transfer instruction issued to said node-to-node connection controller.
